# EUROPEAN PATENT APPLICATION

(11) **EP 1 981 256 A1**
(43) Date of publication of application: **15.10.2008**
(21) Application number: 08154379.5
(22) Date of filing: 11.04.2008
(51) Int. Cl.: H04M 3/42, G10L 15/26, G10L 15/28

(54) **Speech recognition method and system and speech recognition server**

(30) Priority: 11.04.2007 CN 200710027509; 21.02.2008 WO PCT/CN2008/070335
(71) Applicant: Huawei Technologies Co., Ltd., Longgang District, Shenzhen, Guangdong 518129 (CN)
(72) Inventor: Yu, Zhou, Guangdong 518129 (CN); Meng, Yuetao, Guangdong 518129 (CN); Chen, Keping, Guangdong 518129 (CN)
(74) Representative: Thun, Clemens

(57) **Abstract**

A speech recognition method is provided. The speech recognition method includes the steps of: receiving speech information from at least one User Equipment; analyzing and recognizing the speech information and searching for a speech feature matching the speech information; and obtaining an instruction in accordance with the speech feature and executing the instruction. The invention further discloses a speech recognition system and a speech recognition server. With the invention, a cost of the User Equipment is reduced and accuracy of speech recognition can be improved.

## Description

This application claims benefits to Chinese patent application No. 200710027509.5, entitled "Speech Recognition Method and System and Speech Recognition Server" and filed on April 11, 2007, and international patent application No. PCT/CN2008/070335, entitled "Speech Recognition Method and System and Speech Recognition Server" and filed on February 21, 2008, which are herein incorporated by reference in its entirety.

### Field of the Invention

The present invention relates to the field of communication technologies and in particular to a speech recognition method and system and a speech recognition server.

### Background of the Invention

Along with increasing evolvement of communication technologies today, there emerge increasingly a wide range of applications of technologies of speech recognition controlled phone. In the field of telecommunication technologies, a speech control function or a speech query function has been integrated in various User Equipments, UEs, such as phones.

A conventional speech recognition phone incorporates a speech recognition unit, and the speech recognition unit includes a speech unit feature database including speech basic features. The speech recognition phone may perform a speech recognition service, for example, a service of address book recognition. In the service of address book recognition, after a user initiates the speech recognition function and speaks out speech information stored in advance, the phone searches for a phone number corresponding to the speech information to dial the phone number.

With an investigation in course of making the invention, the inventors find that the speech recognition unit is deployed on the User Equipment such as a phone in the speech recognition technology in the related art, which increases a cost of the User Equipment and may not provide a sufficiently good recognition effect for the User Equipment.

### Summary of the Invention

According to embodiments of the invention, a speech recognition method and system and a speech recognition server are provided, to reduce a cost of a speech recognition service.

In an embodiment of the invention, a speech recognition method is provided. The speech recognition method includes the steps of :
receiving speech information from at least one User Equipment;
analyzing and recognizing the speech information, and searching for a speech feature which matches the speech information; and
obtaining an instruction in accordance with the speech feature and executing the instruction.

Accordingly, in an embodiment of the invention, a speech recognition server is provided. The speech recognition server includes :
a speech information access unit adapted to receive speech information from a User Equipment;
a speech recognition unit adapted to analyze a speech feature of the speech information received by the speech information access unit;
an instruction processing unit adapted to obtain an instruction in accordance with an analysis result from the speech recognition unit, and send the instruction to a second instruction interface unit; and
the second instruction interface unit adapted to send the instruction from the instruction processing unit to an instruction executing device for executing.

In an embodiment of the invention, a speech recognition system is provided. The speech recognition system includes:
at least one User Equipment adapted to obtain speech information of a user and convert a speech format of the speech information; and
a speech recognition server adapted to analyze and recognize the speech information from the User Equipment, to search for a speech feature which matches the speech information, and obtain an instruction in accordance with the speech feature.

In the embodiments of the invention, the speech recognition function is not implemented by integrating a speech recognition unit in the User Equipment, the User Equipment is simply provided with an instruction interface unit in communication with a speech server, and speech information sent from the User Equipment is recognized by the speech recognition server, so that the cost of the User Equipment may be reduced greatly.

### Brief Description of the Drawings

Fig. 1 is a schematic diagram of a structure of a speech recognition system according to an embodiment of the invention;

Fig. 2 is a flow chart of a first embodiment of the speech recognition method according to an embodiment of the invention; and

Fig. 3 is a flow chart of a second embodiment of the speech recognition method according to an embodiment of the invention.

### Detailed Description of the Invention

According to embodiments of the invention, a speech recognition method and system and a speech recognition server are provided. A speech recognition function is implemented in a dedicated speech recognition server, and a User Equipment is provided with a set of instruction interface units. The speech recognition server may recognize speech information sent from the User Equipment, and translate the speech information into an instruction identifiable to the User Equipment and send the instruction to the User Equipment via the instruction interface units, so that the User Equipment may be controlled remotely by the dedicated speech recognition server, thereby reducing effectively the cost of the User Equipment and improving accuracy of speech recognition.

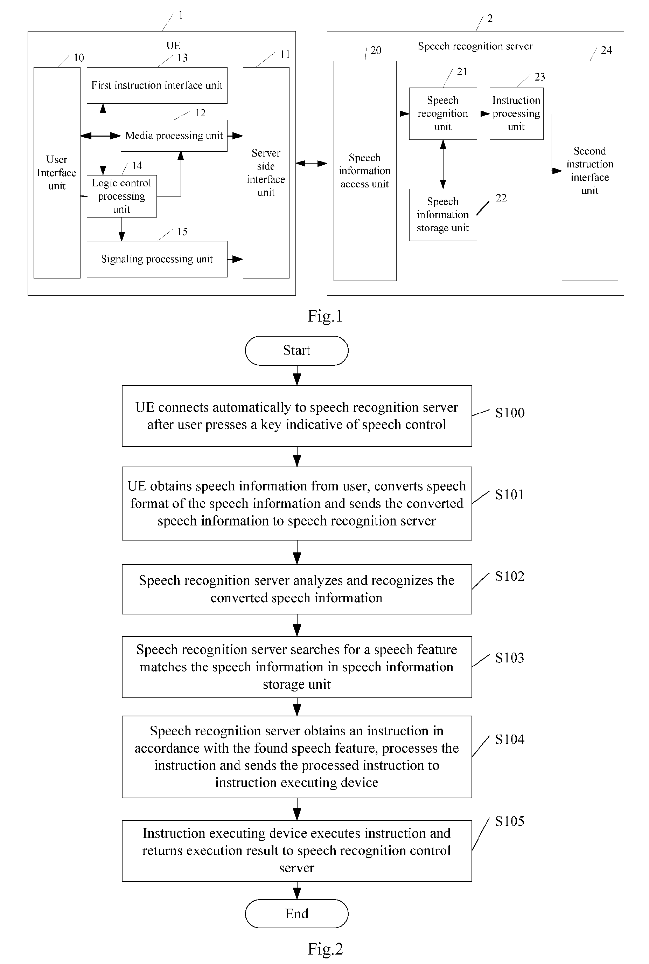

According to an embodiment of the invention, a speech recognition system is provided. With reference to Figure 1, a schematic diagram of a structure of the speech recognition system according to the embodiment of the invention is shown, and the speech recognition system includes:
a User Equipment 1 adapted to obtain speech information of a user, and send the speech information to a speech recognition server 2 after converting a speech format of the speech information. The User Equipment 1 is not required to be provided with a speech recognition unit, instead, the User Equipment is simply provided with an instruction interface unit can be in communication with the speech recognition server.

The User Equipment 1 includes:
a User Interface ,UI, unit 10 adapted to receive speech information from a user. When the user presses a key indicative of speech control on the User Equipment 1, the User interface unit 10 of the User Equipment 1 enters a status of speech command operation. During communication of the User Equipment 1 with another User Equipment, the speech information from the user may be received via the User Interface unit 10 to instruct the User Equipment 1 to connect to the speech recognition server 2;
a server side interface unit 11 adapted to connect to the speech recognition server 2 and enable information exchange between the User Equipment 1 and the speech recognition server 2;
a media processing unit 12 adapted to perform a media process on the speech information received by the User Interface unit 10 and send the processed speech information to the speech recognition server 2 via the server side interface unit 11;
a first instruction interface unit 13 adapted to receive an instruction from the speech recognition server 2, to instruct a logic control processing unit 14 to perform a corresponding operation, and send an completion message to the speech recognition server 2 after the logic control processing unit 14 completes executing of the instruction; and
the logic control processing unit 14 adapted to perform a corresponding operation in response to the instruction received by the first instruction interface unit 13, and notify the first instruction interface unit 13 of completion of executing of the instruction.

The User Equipment 1 further includes:
a signaling processing unit 15 adapted to convert and send a signaling during speech recognition.

The speech recognition server 2 is adapted to analyze and recognize the speech information from the User Equipment 1, to search for a speech feature matching the speech information, and obtain corresponding instruction in accordance with the speech feature.

The speech recognition server 2 includes:
a speech information access unit 20 adapted to receive the speech information from the User Equipment 1; upon receipt of the speech information, the speech information access unit 20 sends the contents of the speech information to a speech recognition unit 21 for speech feature analyzing;
the speech recognition unit 21 adapted to perform speech feature analysis on the speech information received by the speech information access unit 20; and
a speech information storage unit 22 adapted to store a record of the speech feature matching the speech information, and cooperate with the speech recognition unit 21 to analyze the speech feature of the speech information.

It should be noted that the speech recognition unit 21 usually completes the feature analysis of the speech information through the cooperation with the speech information storage unit 22. If a record of the speech feature corresponding to the speech information is found in the speech information storage unit 22, an instruction recorded in the speech information storage unit 22 is retrieved and sent to an instruction processing unit 23 for processing.

It should be noted that the speech recognition unit 21 and the speech information storage unit 22 may be physically separate in a way that they are deployed respectively on different hardware devices.

The speech recognition server 2 further includes: the instruction processing unit 23 adapted to obtain an instruction in accordance with an analysis result from the speech recognition unit 21 and send the obtained instruction to a second instruction interface unit 24; and

the second instruction interface unit 24 adapted to connect to the first instruction interface unit 13 of the User Equipment 1 for sending the instruction to an instruction executing device for executing.

It should be noted that different instructions may be executed by different instruction executing devices. The instruction processing unit 23 may directly send the instruction to the second instruction interface unit 24 which in turn sends the instruction to the User Equipment 1 for executing; or obtain a corresponding instruction parameter from a third party server and send the instruction to the second instruction interface unit 24. For example, when the user sends an instruction of "Number query", the instruction processing unit 23 may interact with an address book server to obtain a phone number about which the user inquires; alternatively, the instruction processing unit 23 may directly send the instruction to a switch or a corresponding server for executing, for example, when the user sends speech information of "Call", the speech recognition server directly sends a "Call instruction" to the switch for executing after recognizing that the speech information relates to "Call". These have been presented herein are merely preferred examples and not limitations of the embodiments of the present invention.

With reference to Figure 2, a schematic flow chart of a first embodiment of the speech recognition method according to the invention is shown.

In step S100, after a user presses a key indicative of speech control on the User Equipment, the User Equipment connects automatically to a speech recognition server. When the connection is established, the User Equipment presents a corresponding indication on its User Interface and enters a status of speech command operation.

In step S101, the User Equipment obtains speech information from the user, converts a speech format of the speech information and sends the converted speech information to the speech recognition server. For example, "057112345678" is spoken out by the user after the speech control key is pressed on the User Interface of the User Equipment, and the User Equipment encodes the speech information of "057112345678" by means of speech coding and sends the encoded media information to the speech recognition server.

In step S102, the speech recognition server analyzes and recognizes a speech feature of the converted speech information.

In step S103, the speech recognition server searches for a speech feature matching the speech feature of the converted speech information in a speech information storage unit.

It should be noted that the steps S102 and S103 are performed with cooperation, in other words, the speech information recognized is delivered to the speech information storage unit for analysis, to search for a record corresponding to the speech information. For example, an operation request of "057112345678" sent by the user is recognized and analyzed, to search for an operation code corresponding to the call.

In step S104, the speech recognition server obtains an instruction in accordance with the found speech feature information, processes the instruction and sends the processed instruction to the instruction executing device for executing. For example, after recognizing the speech information, the speech recognition server sends a display instruction to the User Equipment, and digits of 057112345678 are displayed on the User Interface of the User Equipment. Then, the user speaks out "Dial", and after the User Equipment executes the above operations again, the speech recognition server converts the instruction into an instruction format compatible with the User Equipment and returns an instruction of "Dial 057112345678" to the User Equipment.

It should be noted that different instructions may be executed by different instruction executing devices. The instruction may be sent directly to the second instruction interface unit, which in turn sends the instruction to the User Equipment for executing; or a corresponding instruction parameter may be obtained from a third party server and then the instruction is sent to the second instruction interface unit, so that the instruction is returned to the User Equipment. For example, when the user sends an instruction of "Number query", the instruction processing unit may interact with an address book server to obtain a phone number about which the user inquires; alternatively, instruction processing unit may send directly the instruction to a switch or a corresponding server for executing. For example, when the user sends speech information of "Call", the speech recognition server sends a "Call instruction" directly to the switch for executing after recognizing that the speech information relates to "Call". These have been merely presented herein by way of examples and applications of the embodiments of the invention will not be limited to these.

In step S105, the instruction executing device executes the instruction from the speech recognition server in the step S104 and returns an execution result to the speech recognition server. For example, the User Equipment executes the instruction of "Dial 057112345678", and sends an OK response to the speech recognition server.

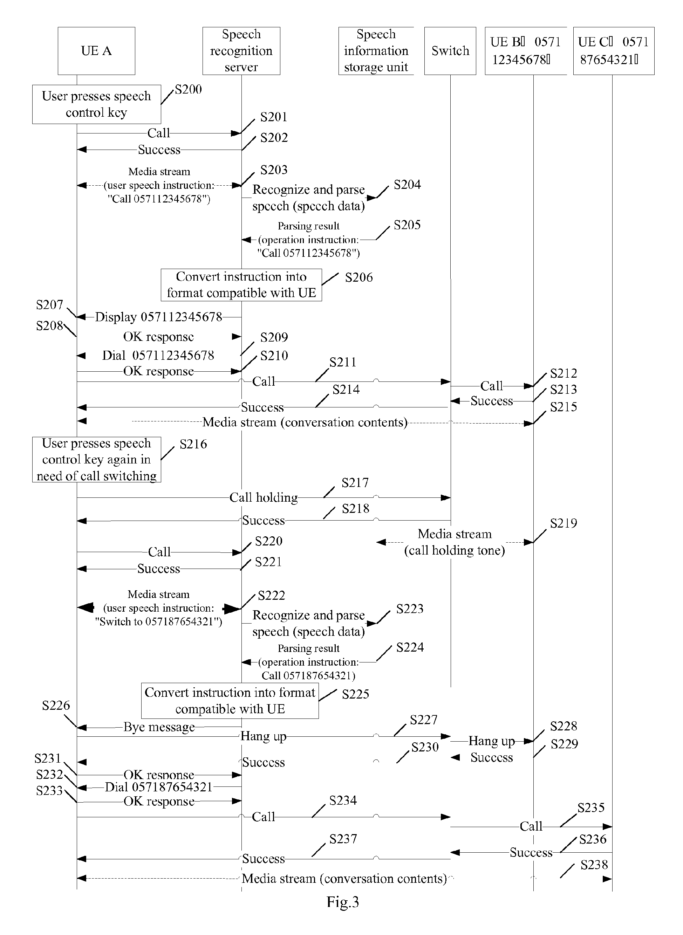

With reference to Figure 3, a schematic flow chart of a second embodiment of the speech recognition method according to the invention is shown.

By way of an example in which a User Equipment A makes a call directed to a User Equipment B (057112345678) through speech and then to a User Equipment C (057187654321), a process flow in the embodiment includes following steps.

In step S200, a user presses a speech control key on the User Interface of the User Equipment A.

In step S201, the User Equipment A automatically calls the speech recognition server so as to connect with the speech recognition server.

In step S202, the speech recognition server returns to the User Equipment A a response of call success.

In step S203, the User Equipment A obtains speech information from a user. For example, a call directed to the User Equipment B with a number of 057112345678 is made, the User Equipment A encodes the speech information of "Call 057112345678" by means of speech coding and sends the encoded media information to the speech recognition server.

In step S204, the speech recognition server analyzes and recognizes a speech feature of the speech information of "Call 057112345678" subjected to the media process, and searches for a corresponding operation code in a speech information storage unit.

In step S205, if a corresponding speech feature record is found in the speech information storage unit, the speech feature record is retrieved to generate a corresponding instruction, and the instruction is sent to the speech recognition server. For example, if a record corresponding to the User Equipment B (057112345678) is found in the speech information storage unit, an instruction of "Call 057112345678" is returned to the speech recognition server.

In step S206, the speech recognition server converts the instruction of "Call 057112345678" into an instruction format compatible with the User Equipment A and sends the instruction to the User Equipment A.

In step S207, digits of 057112345678 are displayed on the User Interface of the User Equipment A.

In step S208, the User Equipment A returns an OK response to the speech recognition server.

In step S209, the speech recognition server sends an instruction of "Dial 057112345678" to the User Equipment A.

In step S210, the User Equipment A returns an OK response to the speech recognition server.

In step S211, the User Equipment A initiates a request to a switch for calling the User Equipment B.

In step S212, the switch initiates a call request to the User Equipment B.

In step S213, the User Equipment B returns a message of call request success to the switch.

In step S214, the switch returns a message of call request success to the User Equipment A.

In step S215, a conversation is conducted between the User Equipment A and the User Equipment B.

In step S216, the user needs to switch the called user, and presses the speech control key on the User Equipment A.

In step S217, the User Equipment A sends a call holding request message to the switch.

In step S218, the switch returns a response of request success to the User Equipment A.

In step S219, the call between the User Equipment B and the speech information storage unit is held on.

In step S220, upon receipt of the indication that the user presses the speech control key, the User Equipment A initiates a call to the speech recognition server.

In step S221, the speech recognition server sends a response of call request success to the User Equipment A.

In step S222, the User Equipment A obtains the speech information of "Switch to 057187654321" from the user; and the speech information is converted via a media process and sent to the speech recognition server in a form of a media stream.

In step S223, the speech recognition server analyzes and recognizes a speech feature of the speech information of "Switch to 057187654321" subjected to the media process and searches for a corresponding operation code in the speech information storage unit.

In step S224, if a corresponding speech feature record is found in the speech information storage unit, the speech feature record is retrieved to generate a corresponding instruction, and the instruction is sent to the speech recognition server. For example, if a record corresponding to the User Equipment C (057187654321) is found in the speech information storage unit, an instruction of "Call 057187654321" is returned to the speech recognition server.

In step S225, the speech recognition server converts the instruction of "Call 057187654321" into an instruction format compatible with the User Equipment A and sends the converted instruction to the User Equipment A.

In step S226, the speech recognition server sends a BYE message to the User Equipment A and waits a subsequent operation command.

In step S227, the User Equipment A sends a hang-up message to the switch to request for terminating the conversation with the User Equipment B.

In step S228, the switch sends a hand-g-up message to the User Equipment B and terminates the conversation between the User Equipment A and the User Equipment B.

In step S229, the User Equipment B sends a response of hang-up success to the switch.

In step S230, the switch sends a response of hang-up success to the User Equipment A.

In step S231, the User Equipment A sends an OK response indicating termination of the conversation with the User Equipment B to the speech recognition server.

In step S232, the speech recognition server sends an instruction of "Dial 057187654321 "to the User Equipment A, instructing the User Equipment A to dial up and connect with the User Equipment C (057187654321).

In step S233, the User Equipment A sends to the speech recognition server an OK response in response to the instruction from the speech recognition server.

In step S234, the User Equipment A initiates a request message to the switch for setting up a call connection with the User Equipment C.

In step S235, the switch sends to the User Equipment C the request message for setting up a call connection.

In step S236, the User Equipment C returns to the switch a response indicative of call connection setting-up success.

In step S237, the switch returns to the User Equipment A the response indicative of call connection setting-up success.

In step S238, the User Equipment A maintains a conversation with the User Equipment C.

It will be appreciated to those ordinarily skilled in the art that all or part of the steps in the method according to the embodiments of the invention may be accomplished by instructing the related hardware with a program, and the program may be stored in a computer-readable medium such as a ROM/RAM, a magnetic disk and an optical disk.

To implement the invention, the speech recognition function by means of a speech recognition technology may be enabled on the dedicated speech recognition server, and the User Equipment is required to be simply provided with a set of instruction interface units; the speech recognition server may recognize speech information sent by the User Equipment, and translate the speech information into an instruction identifiable to the User Equipment and send the instruction to the User Equipment via the instruction interface units, so that the User Equipment may be controlled remotely by the speech recognition server; and the speech recognition server may recognize the speech information sent by the User Equipment, and convert the speech information into an instruction format identifiable to the User Equipment and send the speech information to the User Equipment for executing. In such a way of speech recognition that the User Equipment is controlled centralizedly, the cost of the User Equipment is reduced greatly and accuracy of speech recognition is improved, furthermore, other service applications may be developed on the speech recognition server, thus facilitating deployment and implementation of the services.

The foregoing descriptions are merely illustrative of the embodiments of the invention but are not intended to limit the scope of the invention. Accordingly, equivalent changes made in light of the scope of the invention shall fall within the scope of the claims appended to the invention.

## Claims

1. A speech recognition method, comprising:
receiving speech information from at least one User Equipment;
analyzing and recognizing the speech information and searching for a speech feature which matches the speech information; and
obtaining an instruction in accordance with the speech feature and executing the instruction.

2. The speech recognition method according to claim 1, wherein the executing the instruction comprises:
sending, by a speech recognition server, the instruction directly to the User Equipment for executing.

3. The speech recognition method according to claim 1, wherein the executing the instruction comprises:
sending, by a speech recognition server, the instruction directly to a switch or a server for executing.

4. The speech recognition method according to any one of claims 1 to 3, further comprising: before the receiving the speech information from the User Equipment:
connecting automatically, by the User Equipment, with a speech recognition server after a user presses a key indicative of speech control; and
obtaining, by the User Equipment, the speech information from the user, and performing a media process on the speech information and sending the speech information to the speech recognition server.

5. The speech recognition method according to any one of claims 1 to 3, wherein the obtaining the instruction in accordance with the speech feature comprises:
obtaining from a third party server, by a speech recognition server, the instruction corresponding to the speech feature.

6. A speech recognition server, comprising:
a speech information access unit adapted to receive speech information from a User Equipment;
a speech recognition unit adapted to analyze a speech feature of the speech information received by the speech information access unit;
an instruction processing unit adapted to obtain a corresponding instruction in accordance with an analysis result from the speech recognition unit; and
an instruction interface unit adapted to send the instruction from the instruction processing unit to an instruction executing device for executing.

7. The speech recognition server according to claim 6, further comprising:
a speech information storage unit adapted to store a record of speech feature matching speech information and cooperate with the speech recognition unit in analyzing the speech feature of the speech information.

8. The speech recognition server according to claim 6 or 7, wherein the instruction executing device comprises a User Equipment, a switch or a server.

9. A speech recognition system, comprising:
at least one User Equipment adapted to obtain speech information from a user and convert a speech format of the speech information; and
a speech recognition server adapted to analyze and recognize the speech information from the User Equipment, to search for a speech feature matching the speech information and obtain an instruction in accordance with the speech feature.

10. The speech recognition system according to claim 9, wherein the User Equipment comprises:
a User Interface unit adapted to receive the speech information from a user;
a server side interface unit adapted to connect to a speech recognition server and enable information exchange between the User Equipment and the speech recognition server;
a media processing unit adapted to perform a media process on the speech information received by the User Interface unit and send the processed speech information to the speech recognition server via the server side interface unit;
a first instruction interface unit adapted to receive an instruction from the speech recognition server and send an completion message to the speech recognition server; and
a logic control processing unit adapted to perform a corresponding operation in response to the instruction received by the first instruction interface unit and notify the first instruction interface unit of completion of executing of the instruction.

11. The speech recognition system according to claim 9 or 10, wherein the speech recognition server comprises:
a speech information access unit adapted to receive the speech information from the User Equipment;
a speech recognition unit adapted to analyze the speech feature of the speech information received by the speech information access unit;
an instruction processing unit adapted to obtain a corresponding instruction in accordance with an analysis result from the speech recognition unit; and
a second instruction interface unit adapted to send the instruction from the instruction processing unit to an instruction executing device for executing.
